# EUROPÄISCHE PATENTSCHRIFT

(11) **EP 3 645 543 B1**
(45) Veröffentlichungstag und Bekanntmachung des Hinweises auf die Patenterteilung: **17.03.2021**
(21) Anmeldenummer: 17821878.0
(22) Anmeldetag: 19.12.2017
(51) Int. Cl.: C07F 15/00

(54) **SYNERGISTISCHE KOMBINATIONEN VON PLATIN- UND RHODIUMVERBINDUNGEN ALS KATALYSATOREN BEI HYDROSILYLIERUNGEN**
SYNERGISTIC COMBINATIONS OF PLATINUM AND RHODIUM COMPOUNDS AS CATALYSTS IN HYDROSILYLATION
COMBINAISON SYNERGIQUE DE COMPOSÉS DE PLATINE ET RHODIUM COMME CATALYSEURS LORS D'HYDROSILYLATION

(30) Priorität: 27.06.2017 EP 17178145
(43) Veröffentlichungstag der Anmeldung: 06.05.2020
(73) Patentinhaber: Heraeus Deutschland GmbH & Co. KG, 63450 Hanau (DE)
(72) Erfinder: LÄSSIG, Walter, 63571 Gelnhausen (DE); DONG, Weiwen, Minhang District 201108 Shanghai (CN); WALTER, Richard, 63755 Alzenau (DE); GAISER, Detlef, 63456 Hanau (DE); FUCHS ALAMEDA, Jörg, 63599 Biebergemünd (DE)
(74) Vertreter: Heraeus IP
(86) Internationale Anmeldenummer: PCT/EP2017/083477
(87) Internationale Veröffentlichungsnummer: WO 2019/001754

(56) Entgegenhaltungen:
- DATABASE WPI Week 201247 Thomson Scientific, London, GB; AN 2012-F04538 XP002775440, & CN 102 417 981 A (CHINESE ACAD SCI PROCESS ENG INST) 18. April 2012 (2012-04-18)
- WILLIAM A SOLOMONSZ ET AL: "Controlling the regioselectivity of the hydrosilylation reaction in carbon nanoreactors", CHEMISTRY - A EUROPEAN JOURNAL., Bd. 18, 2012, Seiten 13180-13187, XP002775408, USVCH PUBLISHERS. ISSN: 0947-6539
- M. PLANES ET AL: "Rhodium and platinum hydrosilylation catalysts for increasing UV stability of poly(dimethylsiloxane) in geostationary environment", POLYMER DEGRADATION AND STABILITY, Bd. 142, 1. August 2017 (2017-08-01), Seiten 111-116, XP055423397, GB ISSN: 0141-3910, DOI: 10.1016/j.polymdegradstab.2017.05.030

## Beschreibung

Die Erfindung betrifft synergistische Kombinationen bestimmter Platin- und Rhodiumverbindungen als Katalysatoren bei Hydrosilylierungen.

Bei einer Hydrosilylierung handelt es sich um eine üblicherweise homogenkatalysierte Addition einer HSi-Gruppe an eine olefinische Doppelbindung. Die Reaktion kann zum Aufbau höhermolekularer Organosiliziumverbindungen respektive Silikonen genutzt werden. Beispiele für Silikonprodukte umfassen Elastomerformteile, Abformmassen, Dichtmassen, Einbettungsmassen, Vergussmassen, Imprägniermittel, Beschichtungsmittel und vieles andere mehr.

Die Homogenkatalyse von Hydrosilylierungsreaktionen mit dem sogenannten Karstedt-Katalysator ist aus US3775452A bekannt. Der Karstedt-Katalysator kann durch folgende Formeln beschrieben werden: Pt[(Me₂SiCH=CH₂)₂O]₂ und Pt₂[(Me₂SiCH=CH₂)₂O]₃ Chemistry, a European Journal ,2012,18,13180-13187 offenbart die Verwendung von Rh/Pt als ein katalytisches System zur Verwendung in einer Hydrosilylierungsreaktion. Polymer degradation and stability 142,2017,111-116 beschreibt die getrennte Verwendung von Rhodium und Platin in Hydrosilylierungsreaktionen.

Die Erfindung hat es sich zur Aufgabe gestellt, Hydrosilylierungs-Katalysatoren mit höherer katalytischer Aktivität als der des Karstedt-Katalysators bereitzustellen.

Die Anmelderin konnte eine Kombination aus mindestens einer Platinverbindung ausgewählt aus der Gruppe bestehend aus Pt[(Me₂SiCH=CH₂)₂O]₂ und Pt₂[(Me₂SiCH=CH₂)₂O]₃ und mindestens einer Rhodiumverbindung ausgewählt aus der Gruppe bestehend aus Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat im Molverhältnis Pt/Rh im Bereich von 0,1 bis 100, bevorzugt 0,3 bis 5 und insbesondere 0,8 bis 3 als überraschende Lösung für die Aufgabenstellung der Erfindung auffinden. So haben sich besagte Kombinationen dieser an sich bekannten Edelmetallverbindungen bei vergleichbarem oder sogar geringerem Massenanteil Edelmetall innerhalb einer zur Hydrosilylierung befähigten Zusammensetzung als - im Sinne eines unerwarteten Synergismus - katalytisch wirksamer bei Hydrosilylierungen als der Karstedt-Katalysator alleine oder die betreffenden Rhodiumverbindungen alleine erwiesen. Im Ergebnis eröffnet dies die Möglichkeit, Hydrosilylierungen mit einem insgesamt kleineren Massenanteil Edelmetall zu katalysieren und/oder die Reaktionstemperatur bei Hydrosilylierungen absenken zu können.

Hierin wird der Ausdruck "zur Hydrosilylierung befähigte Zusammensetzung" für solche Zusammensetzungen verwendet, die eine oder mehrere Verbindungen mit mindestens einer im Hinblick auf eine Hydrosilylierung geeigneten HSi-Gruppe und eine oder mehrere Verbindungen mit mindestens einer im Hinblick auf eine Hydrosilylierung geeigneten olefinischen Doppelbindung und/oder eine oder mehrere Verbindungen mit mindestens einer im Hinblick auf eine Hydrosilylierung geeigneten HSi-Gruppe und mindestens einer im Hinblick auf eine Hydrosilylierung geeigneten olefinischen Doppelbindung umfassen. Es sei ausdrücklich darauf hingewiesen, dass der Ausdruck "zur Hydrosilylierung befähigte Zusammensetzung" hierin unabhängig davon, ob eine betreffende Zusammensetzung auch einen Hydrosilylierungskatalysator umfasst, verwendet wird. Mit einer zur Hydrosilylierung befähigten Zusammensetzung kann eine Hydrosilylierung durchgeführt werden. Bei einer Hydrosilylierung wird eine HSi-Gruppe an eine olefinische Doppelbindung addiert. Im Fall der vorliegenden Erfindung geschieht dies edelmetallkatalysiert mittels der synergistischen Kombination der mindestens einen Platin- und der mindestens einen Rhodiumverbindung.

Vorerwähnte synergistisch höhere katalytische Aktivität einer erfindungsgemäßen Kombination kann mittels DSC (differential scanning calorimetry) nach DIN EN ISO 11357-5:2014 beispielsweise bei einer Aufheizrate von 10 K/min bestimmt werden, und zwar als exothermer Peak als Kennzeichen einer innerhalb einer zur Hydrosilylierung befähigten Zusammensetzung stattfindenden Hydrosilylierungsreaktion. Wie die Anmelderin feststellen konnte, liegt der exotherme Peak dabei regelmäßig bei einer niedrigeren Temperatur als der einer alleine mit Karstedt-Katalysator oder einer alleine mit einer oder mehreren der vorerwähnten Rhodiumverbindungen versehenen, ansonsten jedoch gleichen zur Hydrosilylierung befähigten Zusammensetzung, wohlgemerkt bei gleichem Massenanteil an Edelmetall innerhalb der zur Hydrosilylierung befähigten Zusammensetzung.

Vorerwähnte synergistisch höhere katalytische Aktivität einer erfindungsgemäßen Kombination kann alternativ oder zusätzlich durch Vergleich von Topfzeiten besagter zur Hydrosilylierung befähigter Zusammensetzungen bestimmt werden. Für die Zwecke der vorliegenden Patentanmeldung ist die Topfzeit definiert als der Zeitraum bis zur Verdoppelung der Anfangsviskosität. Die Viskosität, d.h. die Anfangsviskosität sowie die im zeitlichen Verlauf ansteigende Viskosität, kann beispielsweise gemessen werden mittels Rotationsviskosimetrie.

Allgemein betrifft die Erfindung eine Zusammensetzung umfassend mindestens eine Platinverbindung ausgewählt aus der Gruppe bestehend aus Pt[(Me₂SiCH=CH₂)₂O]₂ und Pt₂[(Me₂SiCH=CH₂)₂O]₃ und mindestens eine Rhodiumverbindung ausgewählt aus der Gruppe bestehend aus Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat im Molverhältnis Pt/Rh im Bereich von 0,1 bis 100, bevorzugt 0,3 bis 5 und insbesondere 0,8 bis 3.

Die als Karstedt-Katalysator bekannten Platinverbindungen Pt[(Me₂SiCH=CH₂)₂O]₂ respektive Pt₂[(Me₂SiCH=CH₂)₂O]₃ können beispielsweise hergestellt werden durch autokatalytisch unterstützte Umsetzung von H₂PtCl₆ mit einem Reduktionsmittel wie Isopropanol in Gegenwart einer Base wie NaHCO₃ und von 1,1,3,3-Tetramethyl-1,3-divinyldisiloxan, vgl. EP 1 174 435 A2 und EP 1 302 473 A2. Besagte Platinverbindungen sind kommerziell erhältlich, unter anderem von Heraeus als diese Platinverbindungen umfassende organische Lösungen mit verschiedenen Platinanteilen im Bereich von 15 bis 28 Gew.-% (Gewichts-%) unter der Bezeichnung "Karstedt Concentrate".

Bei Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat handelt es sich um kommerziell erhältliche Rhodiumverbindungen.

Rh(acac)(CO)₂, Acetylacetonatodicarbonylrhodium(I) ist beispielsweise von Heraeus und von Umicore jeweils unter der Bezeichnung CARAC erhältlich.

Rh₂(CO)₄Cl₂, Rhodium(I)carbonylchlorid ist beispielsweise von Strem Chemicals Inc. erhältlich.

[Rh(cod)Cl]₂, Di-µ-chloro-bis(cycloocta-1,5-dien)dirhodium(I) ist beispielsweise von Heraeus erhältlich. Es ist ferner von Umicore unter der Bezeichnung Chiralyst P493 erhältlich.

Rh(acac)(cod), (Acetylacetonato)(1,5-cyclooctadien)rhodium(I) ist beispielsweise von Heraeus erhältlich. Es ist ferner von Umicore unter der Bezeichnung Chiralyst P310 erhältlich.

RhH(CO)(PPh₃)₃, Carbonyl(hydrido)(tris(triphenylphosphan)rhodium(I), ist beispielsweise von Heraeus unter der Bezeichnung RODRIDO und von Umicore unter der Bezeichnung Rh HYD-RIDO erhältlich.

Rh(CO)(PPh₃)(acac) ist beispielsweise von Heraeus und von Umicore jeweils unter der Bezeichnung ROPAC erhältlich.

RhCl(CO)(PPh₃)₂ ist beispielsweise von Strem Chemicals Inc. erhältlich.

Rh-2-ethylhexanoat ist beispielsweise von Heraeus und Umicore jeweils als Lösung erhältlich.

Bevorzugt wird die mindestens eine Rhodiumverbindung aus der Gruppe bestehend aus Rh(acac)(CO)₂, Rh₂(CO)₄Cl₂ und [Rh(cod)Cl]₂ ausgewählt.

Es kann sich bei der erfindungsgemäßen Zusammensetzung um eine organische Lösung handeln, insbesondere um eine nichtwässrige organische Lösung. Die erfindungsgemäße Zusammensetzung in Form einer organischen Lösung umfasst mindestens ein organisches Lösemittel, die mindestens eine Platinverbindung und die mindestens eine Rhodiumverbindung, jeweils homogen gelöst. Die erfindungsgemäße Zusammensetzung kann allerdings auch eine Suspension sein mit einer die mindestens eine Platinverbindung und die mindestens eine Rhodiumverbindung, jeweils homogen organisch gelöst, enthaltenden kontinuierlichen Phase.

Das mindestens eine organische Lösemittel kann im Hinblick auf eine Hydrosilylierung reaktives Lösemittel und/oder nichtreaktives Lösemittel umfassen. Im Hinblick auf eine Hydrosilylierung reaktive Lösemittel sind solche, die als Reaktionspartner an einer Hydrosilylierung teilnehmen können, d.h. im Sinne von Verbindungen, die mindestens eine geeignete HSi-Gruppe und/oder mindestens eine geeignete olefinische Doppelbindung bereitstellen. Bevorzugt ist das mindestens eine organische Lösemittel ausgewählt aus dem im Hinblick auf eine Hydrosilylierung reaktiven 1,1,3,3-Tetramethyl-1,3-divinyldisiloxan und im Hinblick auf eine Hydrosilylierung nichtreaktiven Lösemitteln aus der Gruppe bestehend aus Aromaten, Araliphaten wie beispielsweise Toluol und Xylol, halogenierten Kohlenwasserstoffen wie beispielsweise Chlorbenzol und Fluorbenzol, und sauerstoffhaltigen organischen Lösemitteln wie beispielsweise Methanol, Ethanol und Isopropanol.

Die erfindungsgemäße Zusammensetzung kann einen oder mehrere Inhibitoren umfassen. Der oder die Inhibitoren können gegebenenfalls als einziges Additiv oder einzige Additive oder neben anderen Additiven in der erfindungsgemäßen Zusammensetzung enthalten sein. Beispiele für bevorzugte Inhibitoren umfassen Aniline wie beispielsweise Anilin, C≡C-Dreifachbindungen enthaltende Alkohole wie beispielsweise Ethinylcyclohexanol und Phenylpyridine wie beispielsweise Phenylpyridin. Der oder die Inhibitoren können die Hydrosilylierungsreaktion respektive die erfindungsgemäße synergistische Katalyse der Hydrosilylierungsreaktion inhibieren. Die inhibierende Wirkung lässt sich durch Temperaturerhöhung zurückdrängen bzw. aufheben.

Die erfindungsgemäße Zusammensetzung kann ein oder mehrere weitere Additive umfassen, beispielsweise neben oder anstelle des mindestens einen Inhibitors. Beispiele umfassen Promotoren, Farbstoffe, Füllstoffe, Dispergiermittel, Haftvermittler, Pigmente, Weichmacher, Stabilisatoren, Rheologiesteuerer und vieles andere mehr.

Wie vorerwähnt, kann die erfindungsgemäße Zusammensetzung mindestens eine im Hinblick auf eine Hydrosilylierung reaktive Verbindung umfassen. Derartige Verbindungen stellen mindestens eine im Hinblick auf eine Hydrosilylierung geeignete HSi-Gruppe und/oder mindestens eine im Hinblick auf eine Hydrosilylierung geeignete olefinische Doppelbindung bereit. Besagte im Hinblick auf eine Hydrosilylierung reaktive Verbindungen können niedermolekular, oligomer oder polymer sein. Beispiele für geeignete olefinische Doppelbindungen bereitstellende Verbindungen umfassen die vinylfunktionellen Polydimethylsiloxane der Produktreihe Polymer VS von Evonik. Beispiele für geeignete HSi-Gruppen bereitstellende Verbindungen umfassen die Polysiloxanvernetzer der Produktreihen Crosslinker 100 und Crosslinker 200 von Evonik.

Die mindestens eine im Hinblick auf eine Hydrosilylierung reaktive Verbindung kann zugleich als im Hinblick auf eine Hydrosilylierung reaktives organisches Lösemittel dienen.

Dem Vorerwähnten zufolge kann es sich bei der erfindungsgemäßen Zusammensetzung, sofern diese eine oder mehrere Verbindungen mit mindestens einer im Hinblick auf eine Hydrosilylierung geeigneten HSi-Gruppe und eine oder mehrere Verbindungen mit mindestens einer im Hinblick auf eine Hydrosilylierung geeigneten olefinischen Doppelbindung und/oder eine oder mehrere Verbindungen mit mindestens einer im Hinblick auf eine Hydrosilylierung geeigneten HSi-Gruppe und mindestens einer im Hinblick auf eine Hydrosilylierung geeigneten olefinischen Doppelbindung umfasst, um eine zur Hydrosilylierung befähigte Zusammensetzung respektive Reaktionsmischung handeln. Es kann sich beispielsweise um eine fertige zur Hydrosilylierung befähigte Zusammensetzung oder, präziser ausgedrückt, um eine zur Hydrosilylierung befähigte Zusammensetzung mit einer gewünschten Formulierung (mit einem gewünschten Rezept) handeln.

In Ausführungsformen kann die erfindungsgemäße Zusammensetzung im Wesentlichen bestehen aus der mindestens einen Platinverbindung, der mindestens einen Rhodiumverbindung, sowie, falls gewünscht, den Bestandteilen: ein oder mehrere organische Lösemittel, ein oder mehrere Inhibitoren, ein oder mehrere von Inhibitoren verschiedene Additive, ein oder mehrere im Hinblick auf eine Hydrosilylierung reaktive Verbindungen. Der hier verwendete Begriff "im Wesentlichen" bedeutet, dass zumindest bewußt keine weiteren Bestandteile hinzugefügt werden; eine eventuelle Anwesenheit weiterer Inhaltsstoffe im Sinne von Verunreinigungen wie sie beispielsweise der Herstellung der mindestens einen Platinverbindung und/oder der mindestens einen Rhodiumverbindung entstammen können, ist möglich.

Die erfindungsgemäße Zusammensetzung weist einen der mindestens einen Platinverbindung und der mindestens einen Rhodiumverbindung entstammenden Edelmetall-Anteil (Platin plus Rhodium) beispielsweise im Bereich von 10 Gew.-ppm (Gewichts-ppm) bis 45 Gew.-%, bevorzugt 30 Gew.-ppm bis 10 Gew.-%, insbesondere 50 Gew.-ppm bis 5 Gew.-% auf, bezogen auf die gesamte Zusammensetzung. Bei erfindungsgemäßen Zusammensetzungen in Form von zur Hydrosilylierung befähigten Zusammensetzungen liegt der Edelmetall-Anteil eher am unteren Ende des genannten Bereichs, beispielsweise im Bereich von 10 bis 1000 Gew.-ppm, bevorzugt 30 bis 1000 Gew.-ppm oder 30 bis 500 Gew.-ppm, insbesondere 50 bis 500 Gew.-ppm oder 50 bis 200 Gew.-ppm, bezogen auf die gesamte zur Hydrosilylierung befähigte Zusammensetzung.

Die Herstellung der erfindungsgemäßen Zusammensetzung, insbesondere in Form einer organischen Lösung, erfordert keine methodischen Besonderheiten. Beispielsweise kann eine organische Lösung umfassend mindestens ein organisches Lösemittel und die mindestens eine Platinverbindung mit einer weiteren organischen Lösung umfassend mindestens ein organisches Lösemittel und die mindestens eine Rhodiumverbindung vermischt werden.

Die Erfindung betrifft auch ein Mehrkomponentensystem zur Herstellung der erfindungsgemäßen Zusammensetzung. Das Mehrkomponentensystem kann beispielsweise eine Komponente (i) in Form einer organischen Lösung umfassend mindestens ein organisches Lösemittel und die mindestens eine Platinverbindung ohne die mindestens eine Rhodiumverbindung und eine separate Komponente (ii) in Form einer organischen Lösung umfassend mindestens ein organisches Lösemittel und die mindestens eine Rhodiumverbindung ohne die mindestens eine Platinverbindung und gegebenenfalls mindestens eine weitere separate von den Komponenten (i) und (ii) verschiedene Komponente umfassen. Beispielsweise kann die von den Komponenten (i) und (ii) verschiedene Komponente einen oder mehrere Inhibitoren umfassen. Durch Vermischen der Komponenten (i), (ii) sowie gegebenenfalls der mindestens einen weiteren von den Komponenten (i) und (ii) verschiedenen Komponente kann eine erfindungsgemäße Zusammensetzung hergestellt werden.

In einer anderen Ausführungsform kann das Mehrkomponentensystem beispielsweise eine Komponente (i') in Form einer organischen Lösung umfassend mindestens ein organisches Lösemittel, die mindestens eine Platinverbindung und die mindestens eine Rhodiumverbindung und mindestens eine weitere separate von der Komponente (i') verschiedene Komponente umfassen. Beispielsweise kann die von der Komponente (i') verschiedene Komponente einen oder mehrere Inhibitoren umfassen. Durch Vermischen der Komponenten (i') sowie der mindestens einen weiteren von der Komponente (i') verschiedenen Komponente kann eine erfindungsgemäße Zusammensetzung hergestellt werden.

Die Erfindung betrifft auch die Verwendung der erfindungsgemäßen Zusammensetzung, beispielsweise in Form einer organischen Lösung, als Katalysator bei einer Hydrosilylierung (als Hydrosilylierungskatalysator) oder, wie dem Vorerwähnten entnommen werden kann, als zur Hydrosilylierung befähigte Zusammensetzung.

In einer Ausführungsform der Verwendung als Hydrosilylierungskatalysator handelt es sich insbesondere um die Verwendung einer ersten organischen Lösung umfassend mindestens ein organisches Lösemittel und die mindestens eine Platinverbindung ohne die mindestens eine Rhodiumverbindung, in Kombination mit einer weiteren organischen Lösung umfassend mindestens ein organisches Lösemittel und die mindestens eine Rhodiumverbindung ohne die mindestens eine Platinverbindung. Mit anderen Worten, die erfindungsgemäße Zusammensetzung wird bei dieser Ausführungsform erst innerhalb einer zur Hydrosilylierung befähigten Zusammensetzung durch separate Hinzugabe der beiden organischen Lösungen zu einer zur Hydrosilylierung befähigten Zusammensetzung respektive bei der Herstellung einer zur Hydrosilylierung befähigten Zusammensetzung verwirklicht. Beispielsweise werden die beiden organischen Lösungen mit der noch katalysatorfreien zur Hydrosilylierung befähigten Zusammensetzung bzw. den die Letztere bildenden Bestandteilen vermischt.

In einer anderen Ausführungsform der Verwendung als Katalysator bei einer Hydrosilylierung handelt es sich insbesondere um die Verwendung einer organischen Lösung, die die mindestens eine Platin- als auch die mindestens eine Rhodiumverbindung schon umfasst. Mit anderen Worten, die erfindungsgemäße Zusammensetzung ist schon verwirklicht, bevor der Kontakt durch Zugabe zu bzw. Vermischen mit einer noch katalysatorfreien zur Hydrosilylierung befähigten Zusammensetzung bzw. den die Letztere bildenden Bestandteilen zustande kommt.

Je nach Art ihrer Anwendung und Verarbeitung kann eine in Rede stehende zur Hydrosilylierung befähigte Zusammensetzung keinen oder einen gewünschten Anteil an Additiven, an nichtreaktivem organischem Lösemittel, an reaktivem organischem Lösemittel, an Verbindungen mit mindestens einer im Hinblick auf eine Hydrosilylierung geeigneten HSi-Gruppe und/oder mit mindestens einer im Hinblick auf eine Hydrosilylierung geeigneten olefinischen Doppelbindung umfassen.

Mit einer erfindungsgemäßen Zusammensetzung, beispielsweise in Form einer zur Hydrosilylierung befähigten Zusammensetzung, können Hydrosilylierungen durchgeführt werden.

Dabei kann es sich um eine Hydrosilylierung im Sinne einer chemischen Synthese einer niedermolekularen Verbindung, genauer gesagt, einer Silanverbindung handeln.

Bevorzugt handelt es sich um Hydrosilylierungen, die im Sinne einer Vernetzungsreaktion, also einer ein Polymernetzwerk bildenden Polymerisation - genauer gesagt - einer Polyaddition ablaufen.

Eine derartige Polyaddition kann in einem Bereich niedriger Temperaturen beispielsweise von 0 bis 38°C durchgeführt werden; dabei kann eine zur Anwendung kommende zur Hydrosilylierung befähigte Zusammensetzung zweckmäßigerweise keine Inhibitoren umfassen.

Eine derartige Polyaddition kann aber auch bei höheren Temperaturen erfolgen, beispielsweise in einem Temperaturbereich von >38 bis 150 °C.

Eine Zeitdauer der Verarbeitungsfähigkeit (Topfzeit) einer zur Anwendung kommenden zur Polyaddition durch Hydrosilylierung befähigten Zusammensetzung kann beispielsweise 2 Minuten bis 10 Stunden betragen. Hier können Inhibitoren Verwendung finden.

Bei den Polymeren, die sich als Polyadditionsprodukt bilden, kann es sich stofflich betrachtet beispielsweise um Polysiloxane bzw. Polymere mit Polysiloxanstrukturen oder Silikone handeln. Eine Polysiloxanstruktur kann dabei mindestens einer Verbindung mit zur Addition an eine olefinische Doppelbindung befähigten HSi-Gruppen und/oder mindestens einer Verbindung mit zur Anlagerung einer HSi-Gruppe befähigten olefinischen Doppelbindungen entstammen.

Besagte Polyaddition kann beispielsweise der Bildung einer Abformung beispielsweise im Dentalbereich, einer Abdichtung, einer Einbettung, eines Vergusses, einer Imprägnierung, und insbesondere eines Elastomerformteils oder einer Beschichtung auf einem Substrat dienen bzw. darin bestehen.

Im Falle der Bildung eines Elastomerformteils kann eine zur Anwendung kommende zur Hydrosilylierung befähigte Zusammensetzung Inhibitoren enthalten oder nicht. Es können zweckmäßigerweise keine oder nur geringe Anteile nichtreaktiven organischen Lösemittels enthalten sein, welches nach Beendigung der Polyaddition aus dem Elastomerformteil - gegebenenfalls unterstützt durch geeignete Maßnahmen wie Erwärmen - entweichen kann. Reaktives, ins zu bildende Elastomer einpolymerisierbares organisches Lösemittel kann enthalten sein.

Wie vorerwähnt, kann die erfindungsgemäße Zusammensetzung in der Ausführungsform einer zur Hydrosilylierung befähigten Zusammensetzung als Beschichtungsmittel formuliert sein bzw. verwendet werden. Im Falle der Beschichtung auf einem Substrat, beispielsweise Papier, Pappe, Metallfolie oder Kunststofffolie, kann eine zur Anwendung kommende zur Hydrosilylierung befähigte Zusammensetzung zweckmäßigerweise Inhibitoren enthalten, insbesondere, wenn eine gewünschte Topfzeit eingestellt werden soll. Es kann auch zweckmäßig sein, wenn nichtreaktives organisches Lösemittel enthalten ist, das während und/oder nach Applikation des Beschichtungsmittels und/oder während und/oder nach erfolgter Polyaddition aus der Beschichtung, gegebenenfalls unterstützt durch geeignete Maßnahmen wie Erwärmen - entweichen kann. Reaktives in die zu bildende Polymerschicht einpolymerisierbares organisches Lösemittel kann enthalten sein.

### Erfindungsgemäße Beispiele und Vergleichsbeispiele

Beispiel 1: 2,07 g einer einen Platinanteil von 0,52 Gew.-% aufweisenden Mischung aus Karstedt Concentrate von HERAEUS (Platinanteil 20 Gew.-%) und Polymer VS 500 von EVONIK wurden mit 0,548 g einer xylolischen einen Rhodiumanteil von 0,52 Gew.-% aufweisenden Lösung von Rh(acac)(CO)₂ zu einer Katalysatorzusammensetzung vermischt.

0,06 g 1-Ethinylcyclohexanol, 79,9 g Polymer VS 500 von EVONIK und 10,1 g Crosslinker 180 von EVONIK wurden zu einer zur Hydrosilylierung befähigten Mischung vermischt.

1,38 g der Katalysatorzusammensetzung wurden mit 90 g der auf 40 °C vorgewärmten zur Hydrosilylierung befähigten Mischung vermischt.

Die so hergestellte katalysierte zur Hydrosilylierung befähigte Mischung wurde mittels DSC auf das Auftreten eines exothermen Peaks untersucht. Bei der DSC-Untersuchung handelte es sich um die Analyse einer Hydrosilylierungsreaktion mittels dynamischer Wärmestromdifferenzkalorimetrie (Messgerät: DSC 200 F3 Maia, Herst. Netzsch Gerätebau GmbH) in geschlossenen Aluminiumtiegeln nach DIN 11357-5:2014, 3.1, 9.2, 10.1 unter Argon (10 L/min) mit einer Heizrate von 10 K/min im Bereich von 30 °C bis 200 °C. Die in Tabelle 1 angegebene Temperatur entspricht der Spitze des exothermen Peaks. Die Reproduzierbarkeit der Messung betrug 1-2 °C.

Ferner wurde die Topfzeit der Mischung mittels Rotationsviskosimetrie (Brookfield DV2Textra, Spindel LVT 4) bei 40 °C bestimmt. Die Topfzeit entspricht der Zeit bis zur Verdoppelung der Anfangsviskosität. Typischerweise härtete die Mischung danach innerhalb weniger Minuten aus.

Beispiel 2: Es wurde analog zu Beispiel 1 gearbeitet mit dem Unterschied, dass 1,06 g der einen Platinanteil von 0,52 Gew.-% aufweisenden Mischung und 0,290 g der xylolischen Lösung von Rh(acac)(CO)₂ separat voneinander zur zur Hydrosilylierung befähigten Mischung gegeben wurden.

Beispiele 3 bis 29: Die Beispiele 3 bis 29 wurden analog zu Beispiel 1 durchgeführt.

Nachfolgende Tabelle zeigt die Ergebnisse der Beispiele 1 bis 29. Bei den Beispielen 3, 4, 6 bis 8, 21-24 und 29 handelt es sich um Vergleichsbeispiele.

| **Beispiel** | **Rh-Verbindung** | **Molverhältnis Pt/Rh** | **Pt+Rh-Gehalt*)** | **Inhibitor**)** | **Exothermer Peak bei °C** | **Topfzeit** |
|---|---|---|---|---|---|---|
| 1 | Rh(acac)(CO)₂ | 2 | 80 | 60 mg E | ./. | 1 h |
| 2 | Rh(acac)(CO)₂ | 2 | 80 | 60 mg E | ./. | 1 h |
| 3 | ./. | n.a. | 80 | 60 mg M | 83 | 57 Min |
| 4 | ./. | n.a. | 80 | 60 mg E | ./. | 1 h 25 Min |
| 5 | Rh(acac)(CO)₂ | 2 | 80 | 60 mg M | 69 | 36 Min |
| 6 | ./. | n.a. | 30 | 120 mg E | 109 | 1 h 47 Min |
| 7 | ./. | n.a. | 30 | 60 mg E | 99 | 11 h |
| 8 | ./. | n.a. | 30 | ./. | ./. | 20 Min |
| 9 | [Rh(CO)₂Cl]₂ | 10,0 | 30 | 60 mg E | 98 | ./. |
| 10 | [Rh(CO)₂Cl]₂ | 1,3 | 30 | 60 mg E | 93 | 3 h 17 Min |
| 11 | [Rh(COD)Cl]₂ | 2 | 30 | 60 mg E | 92 | ./. |
| 12 | Rh(acac)(CO)₂ | 2,6 | 30 | 120 mg E | 100 | 1 h 5 Min |
| 13 | Rh(acac)(CO)₂ | 1,3 | 30 | 120 mg E | 106 | 52 Min |
| 14 | Rh(acac)(CO)₂ | 0,3 | 30 | 60 mg E | 85 | 1 h 7 Min |
| 15 | Rh(acac)(CO)₂ | 1,75 | 30 | 60 mg E | 85 | ./. |
| 16 | Rh(acac)(CO)₂ | 0 | 30 | 60 mg E | ./. | 1 h |
| 17 | Rh(acac)(CO)₂ | 2 | 30 | ./. | ./. | 18 Min |
| 18 | Rh-2-Ethylhexanoat | 5 | 30 | 60 mg E | 96 | ./. |
| 19 | Rh(acac)(CO)₂ | 2 | 100 | 60 mg E | 80 | 1 h |
| 20 | Rh(acac)(CO)₂ | 2 | 100 | 400 mg E | 104 | ./. |
| 21 | ./. | n.a. | 100 | 60 mg E | 81 | 1 h 25 Min |
| 22 | ./. | n.a. | 100 | 400 mg E | 106 | ./. |
| 23 | ./. | n.a. | 150 | 120 mg E | 86 | ./. |
| 24 | ./. | n.a. | 150 | 200 mg A | ./. | 8 Min |
| 25 | [Rh(COD)Cl]₂ | 2 | 150 | 200 mg A | ./. | 6 Min |
| 26 | Rh(acac)(CO)₂ | 2 | 150 | 120 mg E | 84 | ./. |
| 27 | Rh(acac)(CO)₂ | 2 | 150 | 200 mg A | ./. | 5 Min |
| 28 | [Rh(COD)Cl]₂ | 2,1 | 450 | 60 mg E | ./. | 5 Min |
| 29 | ./. | n.a. | 450 | 60 mg E | ./. | 6 Min |

| | | | | | | |
|---|---|---|---|---|---|---|
| n.a., nicht anwendbar A = Anilin E = 1-Ethinylcyclohexanol M = Maleinsäuredimethylester *) Gehalt in der zur Hydrosilylierung befähigten Mischung in Gew.-ppm **) pro 90g zur Hydrosilylierung befähigter Mischung | | | | | | |

## Patentansprüche

1. Zusammensetzung umfassend mindestens eine Platinverbindung ausgewählt aus der Gruppe bestehend aus Pt[(Me₂SiCH=CH₂)₂O]₂ und Pt₂[(Me₂SiCH=CH₂)₂O]₃ und mindestens eine Rhodiumverbindung ausgewählt aus der Gruppe bestehend aus Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat im Molverhältnis Pt/Rh im Bereich von 0,1 bis 100.

2. Zusammensetzung nach Anspruch 1, wobei das Molverhältnis Pt/Rh im Bereich von 0,3 bis 5 liegt.

3. Zusammensetzung nach Anspruch 1 oder 2, wobei die mindestens eine Rhodiumverbindung ausgewählt ist aus der Gruppe bestehend aus Rh(acac)(CO)₂, Rh₂(CO)₄Cl₂ und [Rh(cod)Cl]₂.

4. Zusammensetzung nach einem der vorhergehenden Ansprüche in Form einer organischen Lösung umfassend mindestens ein organisches Lösemittel neben der mindestens einen Platinverbindung und der mindestens einen Rhodiumverbindung.

5. Zusammensetzung nach Anspruch 4, wobei das mindestens eine organische Lösemittel ausgewählt ist aus der Gruppe bestehend aus im Hinblick auf eine Hydrosilylierung reaktiven Lösemitteln und nichtreaktiven Lösemitteln.

6. Zusammensetzung nach einem der vorhergehenden Ansprüche umfassend mindestens einen Inhibitor.

7. Zusammensetzung nach einem der vorhergehenden Ansprüche umfassend ein oder mehrere von Inhibitoren verschiedene Additive.

8. Zusammensetzung nach einem der vorhergehenden Ansprüche umfassend mindestens eine im Hinblick auf eine Hydrosilylierung reaktive Verbindung ausgewählt aus der Gruppe bestehend aus niedermolekularen, oligomeren und polymeren Verbindungen.

9. Zusammensetzung nach Anspruch 8, wobei die mindestens eine im Hinblick auf eine Hydrosilylierung reaktive Verbindung ausgewählt ist aus der Gruppe bestehend aus Verbindungen mit mindestens einer im Hinblick auf eine Hydrosilylierung geeigneten HSi-Gruppe, Verbindungen mit mindestens einer im Hinblick auf eine Hydrosilylierung geeigneten olefinischen Doppelbindung und Verbindungen mit mindestens einer im Hinblick auf eine Hydrosilylierung geeigneten HSi-Gruppe und mindestens einer im Hinblick auf eine Hydrosilylierung geeigneten olefinischen Doppelbindung.

10. Zusammensetzung nach einem der vorhergehenden Ansprüche, **gekennzeichnet durch** einen der mindestens einen Platinverbindung und der mindestens einen Rhodiumverbindung entstammenden Edelmetall-Anteil von 10 Gew.-ppm bis 45 Gew.-%, bezogen auf die gesamte Zusammensetzung.

11. Zu einer Hydrosilylierung befähigte Zusammensetzung nach Anspruch 9, umfassend eine oder mehrere Verbindungen mit mindestens einer im Hinblick auf eine Hydrosilylierung geeigneten HSi-Gruppe und eine oder mehrere Verbindungen mit mindestens einer im Hinblick auf eine Hydrosilylierung geeigneten olefinischen Doppelbindung und/oder eine oder mehrere Verbindungen mit mindestens einer im Hinblick auf eine Hydrosilylierung geeigneten HSi-Gruppe und mindestens einer im Hinblick auf eine Hydrosilylierung geeigneten olefinischen Doppelbindung.

12. Zusammensetzung nach Anspruch 11, **gekennzeichnet durch** einen der mindestens einen Platinverbindung und der mindestens einen Rhodiumverbindung entstammenden Edelmetall-Anteil von 10 bis 1000 Gew.-ppm, bezogen auf die gesamte zur Hydrosilylierung befähigte Zusammensetzung.

13. Verwendung einer Zusammensetzung nach einem der Ansprüche 1 bis 10 als Katalysator bei einer Hydrosilylierung oder nach Anspruch 11 oder 12 als zur Hydrosilylierung befähigte Zusammensetzung.

14. Verwendung nach Anspruch 13, wobei es sich bei der Hydrosilylierung um eine chemische Synthese einer niedermolekularen Silanverbindung oder um eine ein Polymernetzwerk bildende Polyaddition handelt.

15. Verwendung nach Anspruch 14, wobei die Polyaddition der Bildung einer Abformung, einer Abdichtung, einer Einbettung, eines Vergusses, einer Imprägnierung, eines Elastomerformteils oder einer Beschichtung auf einem Substrat dient oder in der Bildung derselben besteht.

16. Mehrkomponentensystem zur Herstellung einer Zusammensetzung nach einem der Ansprüche 1 bis 12 umfassend eine Komponente (i) in Form einer organischen Lösung umfassend mindestens ein organisches Lösemittel und mindestens eine aus der aus Pt[(Me₂SiCH=CH₂)₂O]₂ und Pt_{2[}(Me₂SiCH=CH₂)₂O]₃ bestehenden Gruppe ausgewählte Platinverbindung ohne die mindestens eine Rhodiumverbindung und eine separate Komponente (ii) in Form einer organischen Lösung umfassend mindestens ein organisches Lösemittel und mindestens eine aus der aus Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat bestehenden Gruppe ausgewählten Rhodiumverbindung ohne die mindestens eine Platinverbindung und gegebenenfalls mindestens eine weitere separate von den Komponenten (i) und (ii) verschiedene Komponente
oder
umfassend eine Komponente (i') in Form einer organischen Lösung umfassend mindestens ein organisches Lösemittel, mindestens eine aus der aus Pt[(Me₂SiCH=CH₂)₂O]₂ und Pt₂[(Me₂SiCH=CH₂)₂O]₃ bestehenden Gruppe ausgewählte Platinverbindung und mindestens eine aus der aus Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ und Rh-2-ethylhexanoat bestehenden Gruppe ausgewählte Rhodiumverbindung, und mindestens eine weitere separate von der Komponente (i') verschiedene Komponente.

17. Verwendung eines Mehrkomponentensystems nach Anspruch 16 zur Herstellung einer Zusammensetzung nach einem der Ansprüche 1 bis 12 entweder durch Vermischen der Komponenten (i), (ii) sowie gegebenenfalls der mindestens einen weiteren von den Komponenten (i) und (ii) verschiedenen Komponente
oder
durch Vermischen der Komponente (i') und der mindestens einen weiteren von der Komponente (i') verschiedenen Komponente.

## Claims

1. A composition comprising at least one platinum compound selected from the group consisting of Pt[(Me₂SiCH=CH₂)₂O]₂ and Pt₂[(Me₂SiCH=CH₂)₂O]₃, and at least one rhodium compound selected from the group consisting of Rh(acac)CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂, and Rh-2-ethylhexanoate at a molar ratio of Pt/Rh in the range of from 0.1 to 100.

2. The composition according to claim 1, wherein the molar ratio Pt/Rh lies in the range of from 0.3 to 5.

3. The composition according to claim 1 or 2, wherein the at least one rhodium compound is selected from the group consisting of Rh(acac)(CO)₂, Rh₂(CO)₄Cl₂, and [Rh(cod)Cl]₂.

4. The composition according to any one of the preceding claims in the form of an organic solution comprising at least one organic solvent in addition to the at least one platinum compound and the at least one rhodium compound.

5. The composition according to claim 4, wherein the at least one organic solvent is selected from the group consisting of solvents, which are reactive with respect to a hydrosilylation, and of non-reactive solvents

6. The composition according to any one of the preceding claims, comprising at least one inhibitor.

7. The composition according to any one of the preceding claims, comprising one or several additives other than inhibitors.

8. The composition according to any one of the preceding claims, comprising at least one compound, which is reactive with respect to a hydrosilylation, selected from the group consisting of low-molecular, oligomeric, and polymeric compounds.

9. The composition according to claim 8, wherein the at least one compound, which is reactive with respect to a hydrosilylation, is selected from the group consisting of compounds comprising at least one HSi group, which is suitable with respect to a hydrosilylation, compounds comprising at least one olefinic double bond, which is suitable with respect to a hydrosilylation, and compounds comprising at least one HSi group, which is suitable with respect to a hydrosilylation, and at least one olefinic double bond, which is suitable with respect to a hydrosilylation.

10. The composition according to any one of the preceding claims, **characterised by** a precious metal content originating from the at least one platinum compound and from the at least one rhodium compound, of from 10 ppm by weight to 45% by weight, based on the total composition.

11. A composition according to claim 9, which is capable of a hydrosilylation, comprising one or several compounds comprising a HSi group, which is suitable with respect to a hydrosilylation, and one or several compounds comprising at least one olefinic double bond, which is suitable with respect to a hydrosilylation, and/or one or several compounds comprising at least one HSi group, which is suitable with respect to a hydrosilylation, and at least one olefinic double bond, which is suitable with respect to a hydrosilylation.

12. The composition according to claim 11, **characterised by** a precious metal content originating from the at least one platinum compound and from the at least one rhodium compound, of from 10 to 1000 ppm by weight, based on the total composition, which is capable of the hydrosilylation.

13. Use of a composition according to any one of claims 1 to 10 as catalyst for a hydrosilylation, or according to claim 11 or 12 as composition, which is capable of the hydrosilylation.

14. The use according to claim 13, wherein the hydrosilylation is a chemical synthesis of a low-molecular silane compound or a polymer network-forming polyaddition.

15. The use according to claim 14, wherein the polyaddition serves for the formation of an impression, of a seal, of an embedding, of a grouting, of an impregnation, of a moulded elastomer part, or of a coating on a substrate, or which consists in the formation thereof.

16. A multi-component system for the production of a composition according to any one of claims 1 to 12, comprising a component (i) in the form of an organic solution comprising at least one organic solvent, and at least one platinum compound selected from the group consisting of Pt[(Me₂SiCH=CH₂)₂O]₂ and Pt₂[(Me₂SiCH=CH₂)₂O]₃, without the at least one rhodium compound, and a separate component (ii) in the form of an organic solution comprising at least one organic solvent, and at least one rhodium compound selected from the group consisting of Rh(acac)CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂, and Rh-2-ethylhexanoate, without the at least one platinum compound, and optionally at least one further separate component, which differs from the components (i) and (ii),
or
comprising a component (i') in the form of an organic solution comprising at least one organic solvent, at least one platinum compound selected from the group consisting of Pt[(Me₂SiCH=CH₂)₂O]₂ and Pt₂[(Me₂SiCH=CH₂)₂O]₃, and at least one rhodium compound selected from the group consisting of Rh(acac)CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂, and Rh-2-ethylhexanoate, and at least one further separate component, which differs from the component (i').

17. Use of a multi-component system according to claim 16 for the production of a composition according to any one of claims 1 to 12 either by mixing the components (i), (ii) as well as optionally the at least one further component, which differs from the components (i) and (ii),
or
by mixing the component (i') and the at least one further component, which differs from the component (i').

## Revendications

1. Composition comprenant au moins un composé de platine, sélectionné dans le groupe se composant de Pt[(Me₂SiCH=CH₂)₂O]₂ et Pt₂[(Me₂SiCH=CH₂)₂O]₃, et au moins un composé de rhodium, sélectionné dans le groupe se composant de Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ et 2-éthylhexanoate de rhodium, dans un rapport molaire Pt/Rh de l'ordre de 0,1 à 100.

2. Composition conformément à la revendication 1, le rapport molaire Pt/Rh étant de l'ordre de 0,3 à 5.

3. Composition conformément à la revendication 1 ou 2, au moins un composé de rhodium étant sélectionné dans le groupe se composant de Rh(acac)(CO)₂, Rh₂(CO)₄Cl₂ et [Rh(cod)Cl]₂.

4. Composition conformément à l'une des revendications précédentes, sous la forme d'une solution organique comprenant au moins un solvant organique, en plus d'au moins un composé de platine et au moins un composé de rhodium.

5. Composition conformément à la revendication 4, au moins un solvant organique étant sélectionné dans le groupe se composant de solvants réactifs et de solvants non réactifs par rapport à une hydrosilylation.

6. Composition conformément à l'une des revendications précédentes, comprenant au moins un inhibiteur.

7. Composition conformément à l'une des revendications précédentes, comprenant un ou plusieurs additifs différents des inhibiteurs.

8. Composition conformément à l'une des revendications précédentes, comprenant au moins un composé réactif par rapport à une hydrosilylation, sélectionné dans le groupe se composant de composés de faible poids moléculaire, oligomères et polymères.

9. Composition conformément à la revendication 8, au moins un composé réactif par rapport à une hydrosilylation, étant sélectionné dans le groupe se composant de composés avec au moins un groupe HSi approprié à une hydrosilylation, de composés avec au moins une double liaison oléfinique appropriée à une hydrosilylation et de composés avec au moins un groupe HSi approprié à une hydrosilylation et au moins une double liaison oléfinique appropriée à une hydrosilylation.

10. Composition conformément à l'une des revendications précédentes, **caractérisée par** une teneur en métal précieux de 10 ppm en poids à 45% en poids, provenant au moins d'un composé de platine et au moins d'un composé de rhodium, par rapport à la composition totale.

11. Composition apte à une hydrosilylation, conformément à la revendication 9, comprenant un ou plusieurs composés avec au moins un groupe HSi approprié à une hydrosilylation et un ou plusieurs composés avec au moins une double liaison oléfinique appropriée à une hydrosilylation et/ou un ou plusieurs composés avec au moins un groupe HSi approprié à une hydrosilylation et au moins une double liaison oléfinique appropriée à une hydrosilylation.

12. Composition conformément à la revendication 11, **caractérisée par** une teneur en métal précieux de 10 à 1000 ppm en poids, provenant au moins d'un composé de platine et au moins d'un composé de rhodium, par rapport à la composition totale, apte à l'hydrosilylation.

13. Utilisation d'une composition conformément à l'une des revendications 1 à 10 comme catalyseur avec une hydrosilylation ou conformément à la revendication 11 ou 12 comme composition apte à l'hydrosilylation.

14. Utilisation conformément à la revendication 13, l'hydrosilylation étant une synthèse chimique d'un composé de silane de faible poids moléculaire ou une polyaddition formant un réseau de polymères.

15. Utilisation conformément à la revendication 14, la polyaddition servant à la formation d'une empreinte, d'une étanchéité, d'une intégration, d'un enrobage, d'une imprégnation, d'un moulage élastomère ou d'une enduction sur un substrat ou consistant dans la formation de ces derniers.

16. Système multi-composants pour la fabrication d'une composition conformément à l'une des revendications 1 à 12, comprenant un composant (i) sous la forme d'une solution organique comprenant au moins un solvant organique et au moins un composé de platine, sélectionné dans le groupe se composant de Pt[(Me₂SiCH=CH₂)₂O]₂ et Pt₂[(Me₂SiCH=CH₂)₂O]₃, sans au moins un composé de rhodium, et un composant (ii) séparé sous la forme d'une solution organique comprenant au moins un solvant organique et au moins un composé de rhodium, sélectionné dans le groupe se composant de Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ et 2-éthylhexanoate de rhodium, sans au moins un composé de platine et, le cas échéant, au moins un autre composant séparé, différent des composants (i) et (ii)
ou
comprenant un composant (i') sous la forme d'une solution organique comprenant au moins un solvant organique, au moins un composé de platine, sélectionné dans le groupe se composant de Pt[(Me₂SiCH=CH₂)₂O]₂ et Pt₂[(Me₂SiCH=CH₂)₂O]₃, et au moins un composé de rhodium, sélectionné dans le groupe se composant de Rh(acac)(CO)₂, Rh₂(CO)₄Cl₂, [Rh(cod)Cl]₂, Rh(acac)(cod), RhH(CO)(PPh₃)₃, Rh(CO)(PPh₃)(acac), RhCl(CO)(PPh₃)₂ et 2-éthylhexanoate de rhodium, et au moins un autre composant séparé, différent du composant (i').

17. Utilisation d'un système multi-composants conformément à la revendication 16, pour la fabrication d'une composition conformément à l'une des revendications 1 à 12, soit par le mélange des composants (i), (ii) et, le cas échéant, au moins d'un autre composant différent des composants (i) et (ii)
ou
par le mélange du composant (i') et au moins d'un autre composant différent du composant (i').
